# EUROPEAN PATENT APPLICATION

(11) **EP 0 790 452 A2**
(43) Date of publication of application: **20.08.1997**
(21) Application number: 97500035.7
(22) Date of filing: 14.02.1997
(51) Int. Cl.: F16L 3/00, F16L 41/06, F16L 47/00

(54) **Improved hinged collar**

(30) Priority: 15.02.1996 ES 9600377 U
(71) Applicant: Hidroten, S.A., 03113 Alicante (ES)
(72) Inventor: Ten Juan, Manuel, 03016 Alicante (ES)
(74) Representative: Ruiz Francos Florez, Alejandro

(57) **Abstract**

This invention refers to a hinged collar (1,2) to be used in the construction of fluid-carrying mains pipes as an element of assembly (3,4) for effective connection between different pipes or irrigation mains and for branches from a mains system. It is an original device which will be used in the fluid mains pipe industry.

## Description

This invention, the IMPROVED HINGED COLLAR, consists of an improved hinged collar to be used in the construction of fluid mains facilities as an assembly element for effective connection between different pipes or irrigation systems and for branching systems from a mains pipe. It is therefore a novel and original device which will be used in the fluid mains installations industry. Due to its simplicity and originality, it offers a large number of advantages or benefits, such as its simplicity to install, its high degree of efficiency, and its reliability, which will, moreover, have repercussions as regards lower labour costs on assembly and dismantling operations of mains installations.

At the present time, systems for construction of complex systems of fluid mains are well known: they consist basically of a set of parts, each of which fulfil a particular type of function, and which connect up with each other to form the installation required in each case. Thus, mains, per se, are usually cylindrical pipes; with couplings between each other; knee-pipes at different angles for bypasses; valves of different types; and sleeves with branch pipes which divide off into one or several branches, as is the case of this improved hinged collar.

Consequently, in order to construct this type of mains installation for fluids, a sufficiently broad piping system or mains must be laid, through which the water, or fluid in question, reaches the supply points to be laid out geographically over a specific area. This layout of mains pipes must also sometimes meet other requirements, such as being easy to assemble and dismantle. In these cases this improved hinged collar is a considerable advance on the devices currently available. Thanks to its original and novel structure, it provides the advantage of being easy to assemble, making it possible for one single worker to complete the operation, even where access to it is difficult.

From everything explained so far, we can deduce the need for these irrigation water mains to have a large number of branches, and for this reason they should be made up of the above-mentioned structural elements all connected up to each other, such as pipes, knee-pipes and valves apart from other elements. Also, as is logical, each part will require specific measurements for the passage cross section in each of the different sections of a mains installation. This gives rise to an additional practical and economic problem which is the large number of different types of parts which must be manufactured and available in store in order to be able to produce a large number of combinations of different designs when constructing these installations for fluid-carrying mains. In this sense this improved hinged collar with its original and novel design offers advantages which consist of the fact that one single collar can replace several conventional collars. This represents a certain saving, as it reduces the number of different models of parts.

For this reason the improved hinged collar, which is presented as the object of this invention, is a practical element for connecting sections of piping, as well as each of the different branches which come from a mains pipe.

For all the above reasons the improvements of this improved hinged collar have been developed essentially to create a new device made up of a basic structure or collar, consisting of two equal parts in the form of a tubular half-section, terminating at one end in a series of hinged rings, while at the other end ending in the form of a base or platform, so that it can fit into a grip, or with drilled holes for nuts and bolts. Thus, these two equal parts can face each other so that on the side with the hinged rings they cross each other forming a hinge which allows an axle or pin to be passed through, the two parts thus remaining linked. As in some cases, or for certain purposes, the hinged collar will be required to bear high pressure, the hinge may have a large number of rings. This affects the size of the axle or pin, which may be smaller if it requires less mechanical resistance. In addition, as the two previous parts form a tubular half-section, facing each other and linked by the hinge made up of one of their ends, this collar, when closing, takes on a tubular form or coupling between two sections of pipe. This collar may be held in a working position by supporting the opposite end to the hinge using a set of screws and nuts, or any other conventional mechanical clamp, placed in the drilled holes in the above-mentioned base or platform, the form in which the tubular half-section parts end at one of the ends.

Apart from what has been explained so far, the two equal parts in the form of a tubular half-section which make up this improved hinged collar may be given certain special features, such as ribbing or perimetric reinforcements at the ends and in other areas along their length, in order to reinforce their mechanical resistance. Additional elements could also be added for clamping, such as reinforcement washers etc..

The advantage of the fact that this improved hinged collar consists of two equal parts in the form of a half-section, as opposed to other alternatives, is the logical reduction of manufacturing costs, bearing in mind that these parts are normally constructed of a plastic material by an injection process, and where these form two different parts, two different moulds must be manufactured. The manufacture of the mould is a significant cost in this process. What is original about the concept of this collar is that it is easier to assemble than conventional collars, and the fact that there are no screws required to clamp one of the sides, as they have been replaced by the hinge.

In addition, each one of these two equal parts which make up the improved hinged collar has an outlet hole in the middle which can be closed or used as a bypass for branch pipes, so the improved hinged collar can take the form of a sleeve with single or double branchings. This design is yet another advantage or benefit, given that the necessary half-sections can be connected up to the outlet hole of each half-section in order to adapt it to different uses, i.e. outlets of different sizes or sections and different types, for welding or screwing. All this can be done using the same parts which form the base of the improved hinged collar, giving rise to considerable savings in manufacture, as longer series can be manufactured and the number of different parts to be stored is reduced considerably.

Finally, the improved hinged collar offers a benefit that other designs with no hinge lack, as this makes assembly operations considerably easier: a single operator can fit the collar, as it is made up of only one single part, in contrast to other solutions which have two parts and require one worker to fit the different parts of the collar on site and another to hold them. In addition, in certain cases where access to the pipe where the collar is to be fitted is limited, for example, where the pipe runs very close to a wall, this collar can be installed very efficiently and easily - which is not the case with traditional fittings.

Furthermore, this improved hinged collar has the necessary grooves or channels at each end and in the outlet holes to be able to fit the necessary sealing gaskets. Thus, the joints may be effectively sealed with the sections of the main pipe and branches. For all these reasons this invention is a practical and useful device, consisting of a collar which acts as a sleeve to connect the two sections of pipe and which, in turn, makes it possible to divert to different branches, thus obtaining a number of different advantages from its original design, such as reducing the cost of manufacture and marketing, as well as making its installation simpler.

Below a detailed description is given of the improved hinged collar proposed, with reference to the attached diagram. This serves merely as a general example and is not exclusive, offering the best method of construction which can admit variations in detail and which do not require any fundamental alteration in the essential characteristics of these improvements.

This diagram shows:

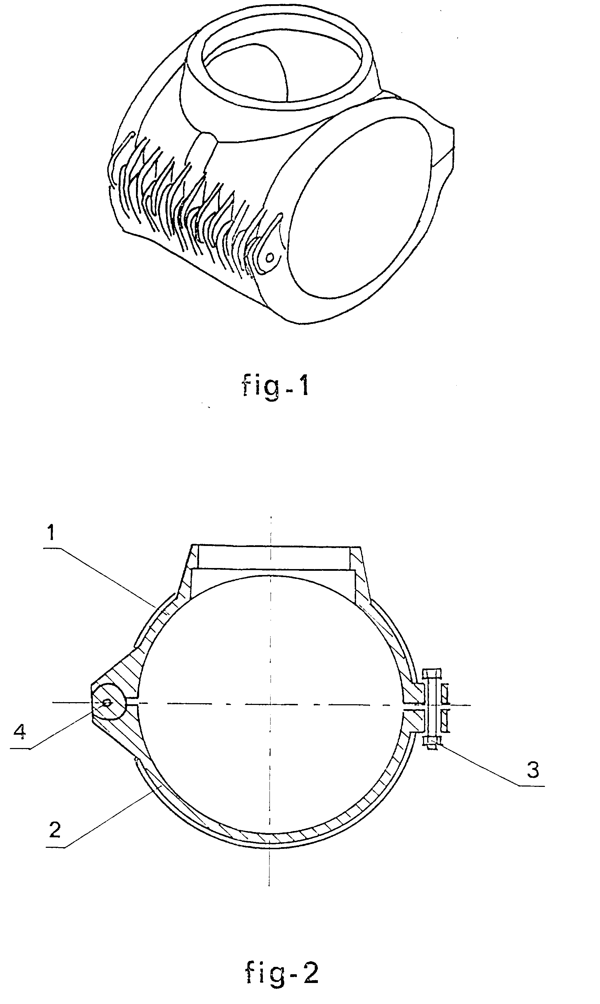

Figure 1: Side view of the improved hinged collar.

Figure 2: Transverse section of the improved hinged collar.

Following the example of construction shown, the improvements in the improved hinged collar to which this invention refers consist of a new element for constructing and installing mains for fluids.

This device or improved hinged collar is made up of two parts in the form of a tubular half-section, the first (1) with an outlet hole in the middle, and the second (2) which in this case is exactly the same as the first, except that it has no hole. Both parts basically form the improved hinged collar and one fits into the other, facing each other at one end where a series of transverse ribs have been made with a hole through them, forming the rings of a hinge which may be fitted to an axle (4) or pin, thus completing the hinge.

In this way, as the two parts (1) and (2) which make up the improved hinged collar are practically identical, certain savings can be made in constructing the mould, if the parts are of a plastic material manufactured by the injection process. Moreover, with this original structure of the improved hinged collar, when the tubular half-sections (1) and (2) are connected using the hinge consisting of the rings at one side and the axle (4), a collar easy to install is obtained, as it consists of one single unit, easy to fit between the two sections of pipe to be joined, without this requiring a worker to hold the unit during assembly operations, in contrast to other traditional solutions.

In addition, at the other end, opposite the hinge rings, the tubular half-section parts (1) and (2) have a transverse base with holes in them, so that when the improved hinged collar is closed by turning the two parts (1) and (2) on the axle (4) of the hinge, the two transverse bases face each other so that they can be clamped using screws or nuts (3) through the holes in them. In this way it is extremely simple to position the collar, connecting two sections of main pipe. All that is required is to tighten the screws and nuts afterwards to fix it permanently.

Apart from what has already been described, as has been indicated, one of the tubular half-section parts (1) has an outlet hole which can be fitted to a large number of joints or sleeves to suit the type and size of outlet to be connected to the pipe of a branch. Thus, different types of outlet can be formed which are not shown here, such as screw-in outlets or outlets for adhesive welding where certain plastic materials are used. For this reason, if using plastic materials, different materials can be worked with, one of which could be suitable for adhesive welding, like the majority, and another which does not admit welding, such as polyurethane.

Furthermore, at both ends this improved hinged collar has a number of grooves which can be fitted to sealing gaskets, not shown here, for sealing the joints with the main pipe. Also, in order to achieve greater mechanical resilience, it has three reinforcement ribs, two at the ends and another in the centre.

For all these reasons, this improved hinged collar is a novel and practical device for the construction of bypasses to branch pipes in mains installations for fluids. Numerous advantages or benefits may be derived from its unusual structure, such as those mentioned above.

Various forms, materials and measurements may be used, as in the case of all accessories and secondary features in general, provided that this does not alter the essential nature of the improvements which have been described.

## Claims

1. IMPROVED HINGED COLLAR, characterised by the fact that it is made up basically of two parts in the form of a tubular half-section, which can each have an outlet hole for branch pipes and are characterised by the fact that both parts have a series of ribs at one side with a hole forming the rings of a hinge which is completed with a pin or axle, which joins the two parts opposite each other and can thus revolve around the pin or hinge axle. Both parts have a base at the other end to fix the collar in the closed position.

2. IMPROVED HINGED COLLAR, as in the first claim, characterised by the fact that both parts, in the form of a half-section, are exactly the same, except that one may have the mentioned outlet hole for branch piping and the other does not.

3. IMPROVED HINGED COLLAR, as per previous claims, characterised by the fact that the outlet hole which the tubular half-sections may have is universal and can be configured to suit the size and type of outlet section using sets of replaceable sleeves of different types which fit into the outlet hole and which may also be of different material from the rest of the collar.

4. IMPROVED HINGED COLLAR as per previous claims, characterised by the fact that at the ends it can also have a number of grooves to fit sealing gaskets for sealing the joint with the sections of pipe fitted into it.

5. IMPROVED HINGED COLLAR.
